(19) Europäisches Patentamt
European Patent Office
Office européen des brevets

(11) Publication number: **0 459 245 A2**

# (12) EUROPEAN PATENT APPLICATION

(21) Application number: **91108012.5**

(51) Int. Cl.[5]: **C08L 79/08**

(22) Date of filing: **17.05.91**

(30) Priority: **30.05.90 US 530389**

(43) Date of publication of application: **04.12.91 Bulletin 91/49**

(84) Designated Contracting States: **DE FR GB IT NL**

(71) Applicant: **GENERAL ELECTRIC COMPANY**
**1 River Road**
**Schenectady New York 12305(US)**

(72) Inventor: **Tyrell, John Alfred**
**P.O. Box 90**
**Getzville, New York(US)**
Inventor: **De Jong, Robertus Eduard**
**Paulusberg 2**
**NL-4615 LA Bergen op Zoom(NL)**

(74) Representative: **Catherine, Alain**
**General Electric France Service de Propriété Industrielle 18 Rue Horace Vernet**
**F-92136 Issy-Les-Moulineaux Cedex(FR)**

## (54) Blow mouldable copolyetherimide ester compositions.

(57) Blow mouldable copolyetherimide ester compositions are provided. The copolyetherimide ester compositions contain respective amounts of copolyetherimide ester resin and ethylene propylene dienemonomer modifier grafted with glycidyl methacrylate. The compositions exhibit suitable melt strength for blow moulding thereof.

EP 0 459 245 A2

## BACKGROUND OF THE INVENTION

### Field of the Invention

The present invention relates to copolyetherimide ester compositions and more particularly relates to blow mouldable copolyetherimide ester compositions.

### Description of Related Art

Various polyetherimide ester polymers are known and are described in McCready, U.S. Patent Nos. 4,544,734 and 4,556,705 and McCready et al., U.S. Patent No. 4,556,688. These polyetherimide esters have, however, lacked the melt strength required to make them suitable for blow moulding thereof.

Glycidyl methacrylate grafted EPDM resins have been set forth as impact modifiers for thermoplastic polyesters and copolyesters (See WO 8805452 based on U.S. Patent application 004,089 filed January 16, 1987; WO 8807064 based on U.S. patent application 027,707 filed March 19, 1987). These references, however, do not disclose copolyetherimide ester compositions exhibiting suitable blow moulding characteristics.

Accordingly, one object of the present invention is to provide a blow mouldable copolyetherimide ester composition.

## SUMMARY OF THE INVENTION

The present invention involves blow mouldable copolyetherimide ester compositions which have respective amounts of copolyesterimide resin and glycidyl methacrylate grafted olefin resin. The compositions exhibit enhanced levels of melt strength and elasticity.

## DETAILED DESCRIPTION OF THE INVENTION

The polyetherimide ester polymers of the present invention are well known elastomers and are described in U.S. Patent Nos. 4,544,734 and 4,566,705 to McCready and in U.S. Patent No. 4,566,688 to McCready et al., all of which are incorporated herein by reference.

These polyetherimide esters are comprised of the reaction products of:

(i) at least one diol;

(ii) at least one dicarboxylic acid or its ester forming reactive derivative; and

(iii) a set of reactants selected from:

(a)(1) at least one high molecular weight poly(oxyalkylene)diamine, and

(a)(2) at least one tricarboxylic acid or its derivative, or

(b) at least one high molecular weight polyoxyalkylene diimide diacid.

Suitable diols (i) for use in the preparation of the polyetherimide ester polymers of the present invention include the saturated and unsaturated aliphatic and cycloaliphatic dihydroxy compounds as well as the aromatic dihydroxy compounds. These diols are preferably of a low molecular weight, i.e., having a molecular weight of about 250 or less. When used herein, the term 'diol' and 'low molecular weight diol' should be construed to include equivalent ester forming derivatives thereof provided, however, that the aforementioned molecular weight requirement pertains to the diols only and not to their ester forming derivatives. Exemplary of ester forming derivatives of diols there may be given the acetates of the diols as well as, for example, ethylene oxide or ethylene carbonate for ethylene glycol.

The preferred saturated and unsaturated aliphatic and cycloaliphatic diols are those having from 2 to about 15 carbon atoms. Exemplary of these there may be given ethylene glycol, propanediol, butanediol, pentanediol, 2-methyl propanediol, 2,2-dimethyl propanediol, hexanediol, decanediol, 1,2-, 1,3- and 1,4-cyclohexane dimethanol, butenediol, hexenediol, etc. Especially preferred are 1,4-butanediol and mixtures thereof with hexanediol, 1,4-cyclohexane dimethanol, or butenediol, most preferably 1,4-butanediol.

Aromatic diols suitable for use in the practice of the present invention are generally those having from 6 to about 15 carbon atoms. Included among the aromatic dihydroxy compounds are resorcinol, hydroquinone, 1,5-dihydroxy naphthalene, 4,4'-dihydroxy naphthalene, 4,4'-dihydroxy diphenyl, bis(p-hydroxy phenyl)methane and bis(p-hydroxy phenyl)methane and bis(p-hydroxy phenyl)-2,2-propane.

Especially preferred diols are the saturated aliphatic diols, mixtures thereof, and mixtures of a saturated diol(s) with an unsaturated diol(s), wherein each diol contains from 2 to about 8 carbon atoms. Where more than one diol is employed, it is generally preferred that at least about 60 mole %, based on the total diol

content, be the same diol, more preferably at least 80 mole %. As mentioned above, the preferred compositions are those in which 1,4-butanediol is present in a predominant amount, most preferably when 1,4-butanediol is the only diol.

Dicarboxylic acids (ii) which are suitable for use in the practice of the present invention are aliphatic, cycloaliphatic, and/or aromatic dicarboxylic acids. These acids are preferably of a low molecular weight, i.e., having a molecular weight of less than about 300. However, in some cases higher molecular weight dicarboxylic acids may be used. The term 'dicarboxylic acids' as used herein, includes equivalents of dicarboxylic acids having two functional carboxyl groups which perform substantially like dicarboxylic acids in reaction with glycols and diols in forming polyesters. These equivalents include esters and esterforming reactive derivatives, such as acid halides and anhydrides. The molecular weight preference mentioned above pertains to the acid and not to its equivalent ester or ester-forming derivatives. Thus, an ester of a dicarboxylic acid having a molecular weight greater than about 300 or an acid equivalent of a dicarboxylic acid having a molecular weight greater than about 300 are included provided the acid has a molecular weight below about 300. Additionally, the dicarboxylic acids may contain any substituent group(s) or combinations which do not substantially interfere with the polymer formation and use of the polymer of this invention.

Aliphatic dicarboxylic acids, as the term is used herein, refer to carboxylic acids having two carboxyl groups each of which is attached to a saturated carbon atom. If the carbon atom to which the carboxyl group is attached is saturated and is in a ring, the acid is cycloaliphatic.

Aromatic dicarboxylic acids, as the term is used herein, are dicarboxylic acids having two carboxyl groups each of which is attached to a carbon atom in an isolated or fused benzene ring system. It is not necessary that both functional carboxyl groups be attached to the same aromatic ring and where more than one ring is present, they can be joined by aliphatic or aromatic divalent radicals such as -O- or $-SO_2-$.

Representative aliphatic and cycloaliphatic acids which can be used for this invention are sebacic acid, 1,2-cyclohexane dicarboxylic acid, 1,3-cyclohexane dicarboxylic acid, adipic acid, glutaric acid, succinic acid, oxalic acid, dimer acid, 4-cyclohexene-1,2-dicarboxylic acid, 2-ethysuberic acid, tetramethylsuccinic acid, cyclopentanedicarboxylic acid, decahydro-1,5 naphthalene dicarboxylic acid, 4,4'-bicyclohexyl dicarboxylic acid, decahydro-2,6 naphthalene dicarboxylic acid, 4,4 methylenebis(cyclohexane carboxylic acid), 3,4-furan dicarboxylic acid, and 1,1-cyclobutane dicarboxylic acid. Preferred aliphatic acids are cyclohexane dicarboxylic acids, sebacic acid, glutaric acid and adipic acid.

Representative aromatic dicarboxylic acids which can be used include terephthalic, phthalic and isophthalic acids, bi-benzoic acid, substituted dicarboxy compounds with two benzene nuclei such as bis(p-carboxyphenyl)methane, oxybis(benzoic acid), ethylene-1,2-bis(p-oxybenzoic acid, 1,5-naphthalene dicarboxylic acid, 2,6-naphthalene dicarboxylic acid, 2,7-naphthalene dicarboxylic acid, phenanthrene dicarboxylic acid, anthracene dicarboxylic acid, 4,4'-sulfonyl dibenzoic acid, and halo and $C_1$-$C_{12}$ alkyl, alkoxy, and aryl ring substitution derivatives thereof. Hydroxy acids such as p(beta-hydroxyethoxy)benzoic acid can also be used provided an aromatic dicarboxylic acid is also present.

Preferred dicarboxylic acids for the preparation of the polyetherimide esters of the present invention are the aromatic dicarboxylic acids, mixtures thereof and mixtures of one or more dicarboxylic acids with an aliphatic and/or cycloaliphatic dicarboxylic acid, most preferably the aromatic dicarboxylic acids. Among the aromatic acids those with 8-16 carbon atoms are preferred, particularly the benzene dicarboxylic acids, i.e., phthalic, terephthalic and isophthalic acids and their dimethyl derivatives. Especially preferred is dimethyl terephthalate.

Finally, where mixtures of dicarboxylic acids are employed in the practice of the present invention, it is preferred that at least about 60 mole %, preferably at least about 80 mole %, based on 100 mole % of dicarboxylic acid (ii) be the same dicarboxylic acid or ester derivative thereof. As mentioned above, the preferred compositions are those in which dimethylterephthalate is the predominant dicarboxylic acid, most preferably when dimethylterephthalate is the only dicarboxylic acid.

The polyetherimide ester polymers of the present invention may be prepared by a one-pot synthesis involving the reaction of the diol (i), the dicarboxylic acid (ii), the high molecular weight poly(oxy alkylene)-diamine (iii)(a)(1), and the tricarboxylic acid or its derivative (iii)(a)(2). In such a synthesis the polyoxyalkylene diimide diacid (iii)(b) is formed in-situ by the reaction of the poly(oxy alkylene)diamine with the tricarboxylic acid.

The poly(oxy alkylene)diamines (iii)(a)(1) suitable for use in the present invention may be represented by the following general formula:

$H_2N\text{-}G\text{-}NH_2$ (I)

wherein G is the radical remaining after the removal of the amino groups of a long chain alkylene ether diamine. These polyether diprimary diamines are available commercially from a Texaco Chemical Company under the trademark JEFFAMINE. In general they are prepared by known processes for the amination of glycols. For example, they may be prepared by aminating the glycol in the presence of ammonia, Raney nickel catalyst and hydrogen as set forth in Belgium Patent No. 634,741. Alternately, they may be prepared by treating glycol with ammonia and hydrogen over a Nickel-Copper-Chromium catalyst as taught by U.S. Patent No. 3,654,370. Other methods for the production thereof include those taught by U.S. Patent Nos. 3,155,728 and 3,236,895 and French Patent Nos. 1,551,605 and 1,466,708, all of the foregoing patents are incorporated herein by reference.

The long chain ether diamines suitable for use herein are the polymeric diamines having terminal (or as nearly terminal as possible) amine groups and an average molecular weight of from about 600 to about 12,000, preferably from about 900 to about 4,000. Additionally, the long chain ether diamines will generally have a carbon-to-oxygen ratio of from about 1.8 to about 4.3.

Representative long chain ether diamines are the poly(alkylene ether)diamines including poly(ethylene ether)diamine, poly(propylene ether)diamine, poly(tetramethylene ether)diamine; random or block copolymers of ethylene oxide and propylene oxide including propylene oxide and poly(propylene oxide) terminated poly(ethylene ether)diamine; and aminated random or block copolymers of tetrahydrofuran with minor amounts of a second monomer such as ethylene oxide, propylene oxide, and methyl tetrahydrofuran (used in proportions such that the carbon-to-oxygen mole ratio in the diamine does not exceed about 4.3 to 1.) Polyformyl diamines prepared by reacting formaldehyde with diols such as 1,4-butanediol and 1,5-pentanediol and subsequently aminating are useful. Especially preferred poly(alkylene ether) diamines are poly(propylene ether)diamine, poly(tetramethylene ether)diamine, and the poly(ethylene ether)glycols which are end-capped with poly(propylene ether) and/or propylene oxide and subsequently aminated.

In general, the polyoxyalkylene diamines useful in the practice of the present invention have an average molecular weight of from about 600 to about 12,000, preferably from about 900 to about 4,000.

The tricarboxylic acid (iii)(a)(2) may be almost any carboxylic acid anhydride containing an additional carboxylic group or the corresponding acid thereof containing two imide-forming vicinal carboxyl groups in lieu of the anhydride group. Mixtures thereof are also suitable. The additional carboxylic group must be esterifiable.

While trimellitic anhydride is preferred as the tricarboxylic acid component, any number of suitable tricarboxylic acid constituents will occur to those skilled in the art including 2,6,7-naphthalene tricarboxylic anhydride, 3,3',4-diphenyl tricarboxylic anhydride, 3,3',5-benzophenone tricarboxylic anhydride, 1,3,4-cyclopentane tricarboxylic anhydride, 2,2',3-diphenyl tricarboxylic anhydride, diphenyl sulfone-3,3',4-tricarboxylic anhydride, ethylene tricarboxylic anhydride, 1,2,5-naphthalene tricarboxylic anhydride, 1,2,4-butane tricarboxylic anhydride, and 1,3,4-cyclohexane tricarboxylic anhydride. These tricarboxylic acid materials can be characterized by the following general formula:

(II)

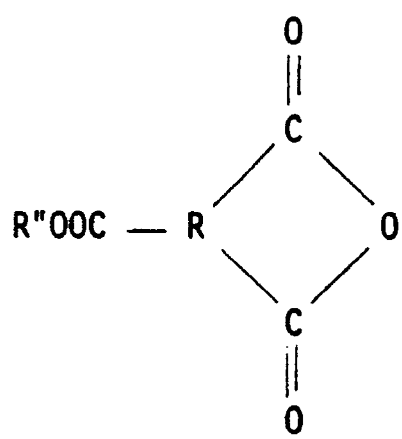

wherein:

R is a trivalent organic radical, preferably a $C_1$-$C_{20}$ aliphatic or cycloaliphatic, or $C_6$-$C_{20}$ aromatic

trivalent radical;

R" is preferably hydrogen or a monovalent organic radical preferably selected for $C_1$-$C_6$ aliphatic and/or cycloaliphatic radicals and $C_6$-$C_{12}$ aromatic radicals, e.g., benzyl; most preferably hydrogen.

In the preparation of the instant polyetherimide ester polymers sufficient amounts of diol versus dicarboxylic acid, and tricarboxylic acid versus diamine must be present, as recognized in the art, to allow for substantially complete polymerization.

This type of one-pot reaction involving the reactions of (i) a diol component, (ii) a dicarboxylic acid component, (iii)(a)(1) a poly(oxy alkylene)diamine component, and (iii)(a)(2) a tricarboxylic acid component is described in U.S. Patent No. 4,556,688 to McCready et al. incorporated herein by reference. In this type of one-pot reaction the amount of diol (i) employed will be, in general, a molar excess, preferably about 1.5 molar equivalents, based on the combined molar equivalents of dicarboxylic acid (ii) and of the total moles of the tricarboxylic acid (iii)(a)(2). The amount of the tricarboxylic acid employed will preferably be about two molar equivalents based on the number of moles of the poly(oxy alkylene)diamine. Obviously, less than two molar equivalents would result in incomplete imidization of the diamine resulting in potentially poorer properties. Conversely, greater than two molar equivalents of the tricarboxylic acid may lead to cross-linking and/or branching of the polymer. Generally, mole ratios of 2 moles tricarboxylic acid to 0.85 to 1.15 moles of poly(oxy alkylene)diamine yield useful polymers.

The amount by which the diamine (iii)(a)(1) and the dicarboxylic acid (ii) are used is generally not critical in forming the polyetherimide esters of the present invention. However, preferred amounts of the poly(oxy alkylene)diamine and dicarboxylic acid used are such that the weight ratio of the theoretical amount of the polyoxyalkylene diimide diacid, formable from the poly(oxyalkylene)diamine and the tricarboxylic acid, to the dicarboxylic acid is from about 0.002 to 2.0:1, preferably from about 0.01 to 2.0:1, and more preferably from about 0.25 to 2.0, and most preferably from about 0.4 to 1.4. The actual weight ratio will be dependent upon the specific poly(oxy alkylene)diamine and tricarboxylic acid used and more importantly upon the desired physical and chemical properties of the resultant polyetherimide ester. In general, the lower the ratio of the theoretical amount of polyoxyalkylene diimide diacid to dicarboxylic acid the better the strength, crystallization and heat distortion properties of the polymer. Alternatively, the higher the ratio, the better the flexibility, tensile set and low temperature impact characteristics.

The instant polyetherimide esters may also be prepared by a two-pot synthesis involving the reaction of the diol (i), the dicarboxylic acid (ii), and the polyoxyalkylene diimide diacid (iii)(b). Such a reaction is described in U.S. Patent No. 4,556,705 to McCready, incorporated herein by reference. Basically, in this process the poly(oxy alkylene)diamine is reacted with the tricarboxylic acid to form a polyoxyalkylene diimide diacid, and the preformed polyoxyalkylene diimide diacid is then reacted with the diol and the dicarboxylic acid to form the polyetherimide ester polymers.

The polyoxyalkylene diimide diacid (iii)(b) may be represented by the general formula:

(III)

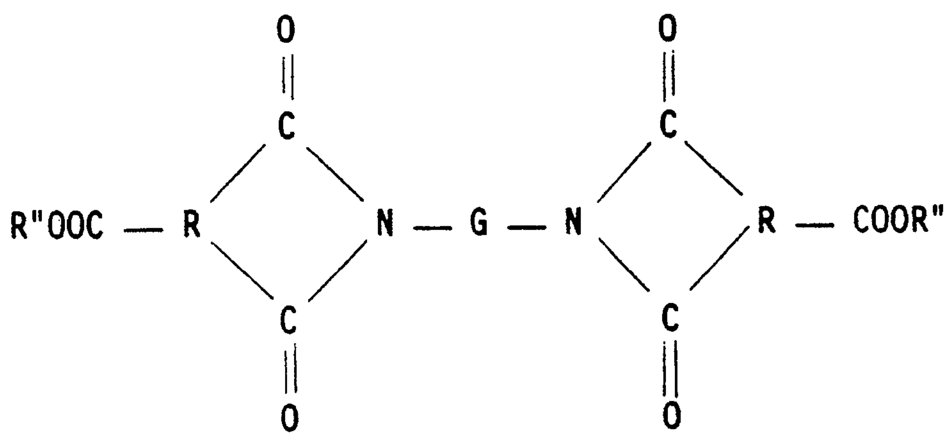

wherein G, R and R" are defined herinafore.

The polyoxyalkylene diimide diacids of Formula III suitable for use herein are high molecular weight diimide diacids having an average molecular weight greater than about 700, preferably greater than about

900. They may be prepared by the imidization reaction of one or more tricarboxylic acids (iii)(a)(2) containing two vicinal carboxyl groups or an anhydride group and an additional carboxyl group which must be esterifiable with the high molecular weight poly(oxy alkylene)diamine (iii)(a)(1). These polyoxyalkylene diimide diacids and processes for their preparation are disclosed in U.S. Patent No. 4,556,705, incorporated herein by reference. Briefly, these polyoxyalkylene diimide diacids may be prepared by known imidization processes including melt synthesis or by synthesizing in a solvent system. Such reactions generally occur at temperatures from about 100 °C to about 300 °C, preferably at temperatures from about 150 °C to about 250 °C, while drawing off water or in a solvent system at the reflux temperature of the solvent or azeotropic (solvent) mixture.

In this two-pot process, as in the one-pot process described hereinafore, it is generally preferred that the diol be present in at least a molar equivalent amount, preferably a molar excess, most preferably at least 150 mole % based on the moles of dicarboxylic acid and polyoxyalkylene diimide diacid combined. Such molar excess of diol generally allows for optimal yields, based on the amount of acids, while accounting for the loss of diol during esterification.

In this two-pot process the amount of polyoxyalkylene diimide diacid and dicarboxylic acid utilized is generally not critical in forming the polyetherimide esters of the present invention. However, preferred amounts of the polyoxyalkylene diimide diacid and dicarboxylic acid used are such that the weight ratio of the polyoxyalkylene diimide diacid to the dicarboxylic acid is from about 0.002 to 2.0:1, preferably from about 0.01 to 2.0:1, more preferably from about 0.25 to 2.0:1, and most preferably from about 0.4 to 1.4:1.

It is also possible, as described in U.S. Patent No. 4,556,688, to prepolymerize the aromatic dicarboxylic acid and the diol to form a prepolyester, and then react this prepolyester with either the diimide diacid or with the tricarboxylic acid and the poly(oxy alkylene)diamine. Forming the prepolyester can be achieved by conventional esterification techniques such as those described in U.S. Patent Nos. 2,465,319 and 2,910,466, all of which are incorporated herein by reference.

In its preferred embodiment, the polyetherimide esters of the instant invention comprise the reaction products of dimethylterephthalate, optionally with up to 40 mole percent of another dicarboxylic acid or its ester forming derivative; butane diol, optionally with another diol such as butene diol, molecular weight of from about 600 to about 12,000, preferably from about 900 to about 4,000, and the trimellitic anhydride, or a polyoxyalkylene diimide diacid.

In the process of the present invention, particularly where all of the reactants are charged to the reactor together or where the polyoxyalkylene diimide diacid is preformed and excess tricarboxylic acid is present, a minor amount of the tricarboxylic acid or anhydride may react with available hydroxyl groups and ultimately function as a branching agent in the finished polymer. Within limits, the degree of branching in the finished polymer can be controlled by varying the mole ratio of tricarboxylic acid to poly(oxy alkylene)-diamine. An excess of diamine reduces the degree of branching, while an excess of the tricarboxylic acid increases branching. In addition to controlling branching by varying the tricarboxylic acid/diamine mole ratio, one can compensate for branching by introducing a mono-functional reactant such as benzoic acid in minor amounts.

With reference to branching, it should be noted that polymers of this invention, when prepared from preformed diimide diacid, are substantially free of branching. If branching is desired, one needs only to introduce a branching agent, such as trimellitic anhydride, along with the preformed diimide diacid. The amount of branching agent will generally be less than about 0.15 moles per mole of diacid. Useful branching agents other than trimellitic anhydride include trimethyl trimellitate, glycerol, trimethylol propane, trimesic acid and its esters, and the like.

The instant polyetherimide esters may be prepared by conventional esterification/condensation reactions for the production of polyesters. These processes are described, inter alia, in U.S. Patent Nos. 3,763,109; 3,651,014; 3,801,547; 4,556,705; and 4,556,688; all of which are incorporated herein by reference.

The polyetherimide esters of the instant invention contain at least the following two recurring structural units:

(IV)

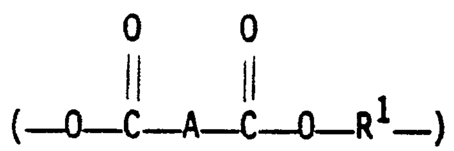 ,

and

(V)

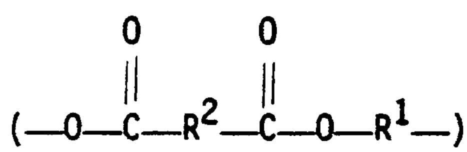

wherein:

A is the residue of the polyoxyalkylene diimide diacid absent the two carboxyl groups, i.e.,

(VI)

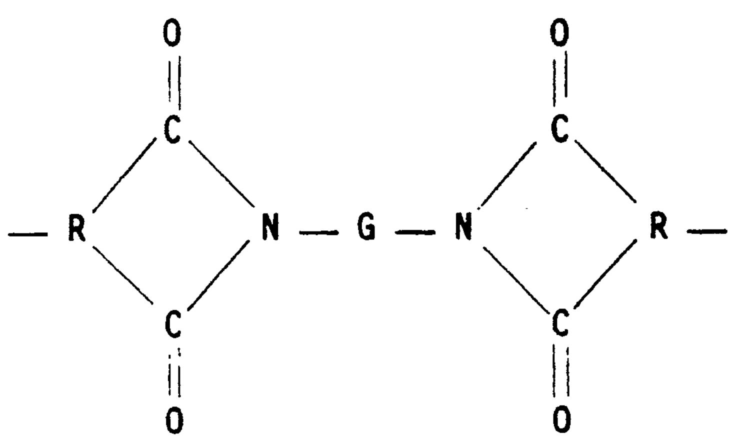 ,

$R^1$ is the residue of the diol absent the two hydroxy groups,

$R^2$ is the residue of the dicarboxylic acid absent the two carboxyl groups, and

G is as defined hereinafore.

Additionally, while not required, it is customary and preferred to utilize a catalyst or catalyst system in the process for the production of the present polyetherimide esters. These types of catalysts are set forth in U.S. Patent Nos. 4,556,705 and 4,566,688, both of which are incorporated herein by reference.

Both batch and continuous methods can be used for any stage of the ether imide ester polymer preparation. Polycondensation of the polyester prepolymer with the polyoxyalkylene diimide diacid can also be accomplished in the solid phase by heating finely divided solid polyester prepolymer with the diimide diacid in a vacuum or in a stream or inert gas to remove the liberated low molecular weight diol. This method has the advantage of reducing degradation because it must be used at temperatures below the softening point of the prepolymer.

The glycidyl ester grafted terpolymer additives of this invention may be prepared from any of the well known EPDM terpolymer rubbers. EPDM terpolymers useful for preparing the grafted materials used in the invention are commercially available, e.g., Copolymer Corp. (EPSYN® 55), or may be prepared using a Ziegler-type catalyst. The preparation of typical EPDM terpolymers is described, for example, in Gresham et al., U.S. 2,933,480; Tarney, U.S. 3,000,866; Guglielmino et al., U.S. 3,407,158; Gladding, U.S. 3,093,621

and U.S. 3,379,701. These terpolymers are characterized by the absence of chain or backbone unsaturation and the presence of sites of unsaturation in groups which are pendant to or are in cyclic structures outside of the main polymer chain.

Useful EPDM terpolymers for the production of the glycidyl ether grafted terpolymers used in this invention comprise ethylene, a $C_3$ to $C_{16}$ straight or branched chain alpha-olefin, preferably propylene, and a non-conjugated diolefin, preferably propylene, and a non-conjugated diolefin. Satisfactory non-conjugated dienes that may be used as the third monomer in the terpolymer include straight chain dienes such as 1,4-hexanediene, cyclic dienes such as cyclo-octadiene and bridged cyclic dienes such as ethylidene norbornene.

Preferred EPDM terpolymers are comprised of about 10-95, preferably 45-70 mole percent, by weight ethylene, about 5 to 90, preferably 30-55 mole percent polypropylene and a minor amount of diene monomer, most preferably a polyunsaturated bridged ring hydrocarbon or halogenated derivative thereof, most preferably 5-ethylidene-2-norbornene. These EPDM terpolymers have a melt index of approximately 79 g/10 min., a Mooney viscosity of approximately 78 and a gram molecular weight of about 21,600.

The backbone rubber is subsequently graft modified with a graft monomer of epoxy functional acrylate or methacrylate. Although grafting may occur by various reaction mechanisms at practically any point on the backbone rubber, generally, the grafting takes place at an unreacted point of unsaturation on the polyene. For this reason, it is desirable to make use of an ethylene, mono-olefin, polyene backbone rubber having at least two unsaturated carbon-to-carbon linkages per 1000 carbon atoms and little additional benefit is derived from the use of unsaturated backbone rubber having more than 20 carbon-to-carbon double bonds per 1000 carbon atoms. In the preferred practice of this invention, use is made of an unsaturated rubber having from 4-10 carbon-to-carbon double bonds per 1000 carbon atoms.

The point of ethylenic unsaturation on the epoxy functional graft monomer must be sufficiently reactive to react directly with the unsaturation of the polyene; or to react with a graft chain originating at, or for combination with, the polyene unsaturation. Such levels of reactivity require the alpha-beta situation of the ethylenic unsaturation as found in, for example, an epoxy functional esters of acrylic acid or alkyl acrylic acid. A free radical initiator, such as a dialkyl peroxide may be used to promote the graft reaction. In order to achieve the desired level of gel content, it is desirable to make use of an initiator in an amount of at least 0.3 percent by weight of the unsaturated rubber. While more than 3 percent by weight initiator can be used to achieve the desired gel content, it is preferred to limit the upper range to about 3% by weight of the unsaturated rubber. A higher amount of catalyst is desired to achieve the level of gel content when the reaction is carried out in solution for production of the impact modifier, while the desired level of gel content can be achieved at lower levels of catalyst content when the reaction is carried out in bulk. An amount of catalyst less than about .3 percent by weight of the unsaturated rubber can be used, but the amount of working required for gel formation of the desired levels results in an undesirable amount of degradation of the backbone rubber.

Preferred as the graft monomer herein is glycidyl methacrylate (GMA).

The graft chain formed by the grafting process on the backbone rubber need not be a homopolymer or even be of entirely epoxy functional graft monomers. For example, combinations of the two above-mentioned epoxy functional graft monomers may be used as well as combinations of either or both with other $C_1$-$C_{18}$ alkyl acrylates or methacrylates, wherein $C_1$-$C_{18}$ may be straight chain or branched, e.g., methyl, ethyl, isopropyl, 2-ethyl-hexyl, decyl, n-octodecyl, and the like. Particularly useful such comonomer grafts are grafts of glycidyl acrylate and/or glycidyl methacrylate and methyl methacrylate.

Preferably the gel content of the elastomeric material is controlled either during polymerization or in subsequent processing to achieve a value of greater than about 10% by weight and less than 80%. With a gel content too low impact strength is high, but resultant knit-line strength may be low. With a gel content too high, both resultant impact strength and knit-line strength may be low.

Gel content is an especially convenient analysis and is measured according to ASTM D-3616 by the weight percent of remaining elastomeric material after extraction in hexane or toluene. Gel content is an indication of the degree of cross-linking in the elastomeric material. Of course, persons skilled in the art are familiar with a variety of ways to control the degree of cross-linking and thus the gel content can be determined by numerous other methods. The cross-link reaction may be a direct rubber backbone to rubber backbone joining, an epoxy functionality to epoxy functionality or rubber backbone joining, or a graft chain free radical addition to a second graft chain or to a rubber backbone. Further, cross-linking may be achieved by the addition of a cross-linking agent to effectively achieve any of the above reactions. Thus, any of several steps to control gel content may be taken. Thermal aging will increase gel content. Increasing the amount of epoxy functional graft monomer will increase gel content. Increasing the amount of polyene monoene monomer in the rubber backbone will increase gel content. The addition of a cross-linking

agent will increase gel content. The use of graft monomers with greater tendency to cross-link will increase gel content, for example, a homopolymer graft of glycidyl acrylate will cross-link more readily than a homopolymer graft of glycidyl methacrylate or a copolymer graft of glycidyl acrylate and methyl methacrylate.

As stated above, gel content of the elastomeric material used in this invention should range up to no higher than about 80%. Although cross-linking can be carried on well past this level, as has been mentioned, high levels of cross-linking diminish the dispersibility of the elastomeric material and lead to non-uniform mixing. Also, such high levels of localized cross-linking will create brittle areas within the elastomeric material which will decrease rubbery character. It is apparent that cross-linking should be uniformly dispersed throughout the elastomeric material.

It is preferred in the present invention that the elastomeric material have an epoxy functionality of at least 2.5 epoxy functionalities per 1000 carbon atoms, and preferably between about 5.0 and 13 epoxy functionalities per 1000 carbon atoms. Epoxy functionality means those epoxy sites which remain in the impact modifier resin after the loss of such functionalities as may react in the cross-linking reaction. In the instance of the use of GMA or GA as the epoxy functional graft monomer, a graft level of about 2% by weight is necessary to provide the minimum level of epoxy as shown above. The maximum is not particularly critical, e.g., up to 10-15% by weight can be used.

The grafting reaction may be carried out in solvent solution with the unsaturated rubber backbone present in a concentration which may range from 10-30 percent by weight, with constant stirring, at an elevated temperature within the range of 125-200 °C for a time ranging from 1/2 to 2 hours. The reaction condition can be varied depending somewhat upon the type and amount of catalyst and temperature conditions, as is well known to those skilled in the art. Where high amounts of graft monomer are to be attached to the backbone rubber, it has been found to be advantageous to carry out the graft reaction in the melt state of the backbone rubber, i.e., extruder grafting. This process is simply performed by feeding the backbone rubber, an excess of graft monomer, and an appropriate catalyst to a melt extruder and mixing and reacting the feed components at an elevated temperature.

The above described glycidyl ester terpolymer additive is physically dispersed in a thermoplastic copolyetherimide ester polymer melt to form discrete particles of rubbery terpolymer in a continuous phase of a thermoplastic copolyetherimide ester matrix resin or blend. At least a melt strength improving amount of glycidyl ester terpolymer additive is dispersed in the matrix resin. Generally, this requires that the elastomeric material constitute at least 1.5 percent by weight, preferably 3.5 to 80 percent, most preferably 10 to 55 percent, by weight based on total thermoplastic content, including elastomeric material, of the moulding composition. It will be apparent that, while the indicated composition range is optimum for making blow moulded plastic articles, acceptable blow moulding materials can still be made from mixtures with rubber contents much higher than this range. Compounding of terpolymer additive and thermoplastic copolyetherimide ester resin is simply carried out by standard techniques, for example, by simple melt blending or dry mixing and melt extruding at an appropriate elevated temperature for any given thermoplastic matrix. The resultant admixture is then blow moulded into a hollow thermoplastic piece of specific dimensions.

It is important to the blow moulding properties of the composition containing glycidyl ester terpolymer additive that there is sufficient mixing in the extrusion of the resin melt.

As has been mentioned, in preferred compositions the particle size of the EPDM rubber grafted with glycidyl esters will be selected to provide that at least 60 weight percent of such particles, and preferably more than 70 weight percent of them are greater than 1 micron in diameter. Such compositions give optimum properties. Particle size can be measured in any of the ways known in this art, but an especially convenient way is to use a computerized particle size analyzer to measure photomicrographs of scanning electron microscopy (SEM) images.

Compounding can be carried out in conventional equipment. For example, after pre-drying the thermoplastic copolyetherimide ester resin, e.g., at 125 °C for 4 hours, a single screw extruder is fed with a dry blend of the copolyetherimide ester and the additive ingredients, the screw employed having a long transition and metering section to insure melting. On the other hand, a twin screw extrusion machine, e.g., a 28 mm Werner Pfleiderer machine can be fed with resin and additives at the feed port. In either case, a generally suitable machine temperature will be about 400 °F to 570 °F.

The compounded composition can be extruded and cut up into moulding components such as conventional granules, pellets, etc., by standard techniques.

It is to be understood that the foregoing compositions may contain other additives known in the art, including, but without limitation, nucleating agents, mould release agents, fillers, flow promoters, coloring agents, coupling agents, and stabilizers. The compositions may also further contain amounts of thermoplastic polyesters such as polyethyleneterephthalate and polybutyleneterephthalate. One may readily determine which are necessary and suitable for a particular application. Preferably as a blow moulding composition the composition is free of reinforcing fibers.

## DESCRIPTION OF THE PREFERRED EMBODIMENTS

The following examples illustrate the invention. The claims are not to be construed to be limited by them in any manner whatsoever.

In the examples the following designations are used to denote the materials and physical tests employed:

### Physical Tests

| | |
|---|---|
| MV | = Melt Viscosity (poise) - modified ASTM D1238. |
| MVI | = Melt Volume Index ($cm^3$/10min) - modified ASTM D1238. |
| UNI | = Unnotched Izod Impact Strength at -30°C - ASTM D256 (1/4" thick; ft. lbs./in.) |
| TE | = Tensile Elongation (%) - ASTM D638. |
| TS | = Tensile Strength (kpsi) - ASTM D638. |
| FM | = Flexural Modulus (kpsi) - ASTM D790. |
| FS | = Flexural Strength (kpsi) - ASTM D790. |
| SG | = Specific Gravity (grams/cubic centimeter). |

### Ingredients

| | |
|---|---|
| LA - | A polyetherimide ester prepared from 27 parts butanediol, 34 parts dimethylterephthalate, and 39 parts of the diimide diacid of trimellitic anhydride and polypropylene ether diamine of average molecular weight 2000. The preparation is as described in U.S. Patent No. 4,556,705. |
| LB - | A polyetherimide ester is prepared from 32 parts butanediol, 40 parts dimethylterephthalate, and 28 parts of the diimide diacid of trimellitic anhydride and polypropylene ether diamine of average molecular weight 2000. The preparation is as described in U.S. Patent No. 4,556,705. |
| B1 - | Is a 60/40 weight blend of EPDM-g-GMA/LB |
| B2 - | Is a 60/40 weight blend of EPDM-g-GMA/LA |
| D - | A cycloaliphatic diepoxide available from Union Carbide as ERL 4421 or from Ciba Geigy as Araldite CY 179. |
| AO - | Phenolic antioxidant tetrakis[methylene-3-(3',5'-di-tert-butyl-4'-hydroxyphenyl)-propionate]-methane. |
| EPDM-g-GMA - | A glycidyl methacrylate grafted EPDM terpolymer wherein the EPDM terpolymer is the reaction product of ethylene, propylene and 5-ethylidene-2-norbornene. The ethylene:propylene mole ratio is 2:1 with 8% by weight of 5-ethylidene-2-norbornene and grafted with 4.5% by weight glycidyl methacrylate based on the total weight of reactants. |

## EXAMPLES

The following example C1 is a comparative example. Examples E2 to E4 are examples of compositions of the present invention. Note the enhanced melt viscosities of the compositions of E2, E3 and E4 in comparison to the composition of C1. Enhanced melt viscosity is important for blow moulding compositions.

**TABLE 1**

| | C1 | E2 | E3 | E4 |
|---|---|---|---|---|
| LA | 59.3 | 50.6 | 40.6 | 45.6 |
| LB | 40.0 | 24.2 | 34.2 | 29.2 |
| B1 | --- | 25.0 | --- | 12.5 |
| B2 | --- | --- | 25.0 | 12.5 |
| D | 0.5 | --- | --- | --- |
| AO | 0.2 | 0.2 | 0.2 | 0.2 |
| MV (poise) | 990 | 1820 | 2030 | 1880 |
| MVI ($cm^3$/P min) | 16.1 | 8.5 | 5.6 | 6.9 |
| UNI (ft lbs/in) | NB | NB | NB | NB |
| TE (%) | 240 | 240 | 230 | 230 |
| TS (kpsi) | 2.5 | 2.1 | 2.1 | 2.1 |
| FM (kpsi) | 20 | 12 | 13 | 12 |
| FS (kpsi) | 1.2 | 0.8 | 0.9 | 0.8 |
| SG | 1.16 | 1.13 | 1.14 | 1.14 |

NB means no breaks

## Claims

1. A blow mouldable composition comprising:
   (i) polyetherimide ester resin; and
   (ii) a melt viscosity increasing amount of an EPDM terpolymer grafted with a grafting agent present at a level of at least 2% by weight based on the weight of said terpolymer, said grafting agent being selected from the group consisting of glycidyl methacrylate, glycidyl acrylate and mixtures thereof.

2. The composition of claim 1 wherein said grafted EPDM terpolymer is derived from 45 to 70 mole percent ethylene, 30 to 55 mole percent propylene and a minor amount of 5-ethylidene-2-norbornene.

3. The composition of claim 1 wherein the EPDM-glycidyl ester grafted terpolymer is present in an amount of, approximately, 1.5 to 35 percent by weight based on the total composition.

4. The composition of claim 1 wherein said grafted EPDM terpolymer is present in an amount of 5 to 25 percent by weight based on the total weight of said composition.

5. A process for blow moulding polyetherimide ester resin, said process comprising:
(a) blow moulding a composition comprising:
(i) polyetherimide ester resin; and
(ii) a melt viscosity increasing amount of an EPDM terpolymer grafted with a grafting agent present at a level of at least 2% by weight based on the weight of said terpolymer, said grafting agent being selected from the group consisting of glycidyl methacrylate, glycldyl acrylate and mixtures thereof.